# EUROPÄISCHE PATENTSCHRIFT

(11) **EP 4 052 932 B1**
(45) Veröffentlichungstag und Bekanntmachung des Hinweises auf die Patenterteilung: **02.04.2025**
(21) Anmeldenummer: 22158478.2
(22) Anmeldetag: 24.02.2022
(51) Int. Cl.: B60B 7/00, B60C 27/02, B60B 15/22, B60C 27/06

(54) **ZUBEHÖRADAPTER ZUR BEFESTIGUNG VON KRAFTFAHRZEUGZUBEHÖR AN EINER RADNABE MIT ZENTRALGEWINDE**
ACCESSORY ADAPTER FOR FASTENING MOTOR VEHICLE ACCESSORIES TO A WHEEL HUB WITH CENTRAL THREAD
ADAPTATEUR D'ACCESSOIRES DESTINÉ À LA FIXATION DES ACCESSOIRES AUTOMOBILES À UN MOYEU DE ROUE À FILETAGE CENTRAL

(30) Priorität: 01.03.2021 DE 102021104881
(43) Veröffentlichungstag der Anmeldung: 07.09.2022
(73) Patentinhaber: RUD Ketten Rieger & Dietz GmbH u. Co. KG, 73432 Aalen (DE)
(72) Erfinder: Arrigoni Neri, Marco, 22046 Merone (IT); Farina, Luigi, 23843 Dolzago (IT); Sieber, Frank, 73432 Aalen (DE)
(74) Vertreter: Grünecker Patent- und Rechtsanwälte PartG mbB

(56) Entgegenhaltungen:
- EP-A1- 2 823 975
- WO-A1-2020/239379
- US-A- 2 477 051
- US-A- 2 517 634
- US-A- 4 278 122

## Beschreibung

Die Erfindung betrifft einen Zubehöradapter zur Befestigung von Kraftfahrzeugzubehör an einer mit einem Zentralgewinde versehenen Radnabe eines Kraftfahrzeugs.

Zubehöradapter zur Befestigung von Kraftfahrzeugzubehör sind bekannt. Diese werden in der Regel an den Radschrauben oder Radmuttern, mit denen die Radfelge an der Radnabe befestigt ist, angebracht. Diese Art der Befestigung ist jedoch nicht immer möglich oder wünschenswert. So sind zum Beispiel Radfelgen bekannt, bei denen die Köpfe der Radschrauben oder die Radmuttern so weit in der Felge versenkt sind, dass die Befestigung eines Zubehöradapters nur umständlich oder gar nicht möglich ist. Es ist ebenso möglich, dass die Radschrauben oder Radmuttern zwar zugänglich sind, aber die Befestigung eines Zubehöradapters an einer solchen Radschraube oder Radmutter trotzdem vermieden werden soll. Dies kann beispielsweise dann der Fall sein, wenn eine Beschädigung der Radfelge oder eine Störung des Erscheinungsbildes der Radfelge verhindert werden soll. Letztendlich sind auch Radfelgen bekannt, die ohne die vorgenannten Radschrauben oder Radmuttern an der Radnabe befestigt werden. Solche Radfelgen werden typischerweise mittels einer Zentralverschlussschraube an der Radnabe befestigt. Diese sogenannten Zentralverschlussfelgen sind beispielsweise aus dem Motorrennsport und dem Tuning-Bereich bekannt. Auch für solche Radfelgen ist es unter Umständen erforderlich, einen Zubehöradapter anzubringen.

Aus der US 2 517 634 A ist eine Gleitschutzvorrichtung bekannt, bei der eine Scheibe am Fahrzeugrad befestigt wird, von der sich Traktionsarme bis auf eine Reifenlauffläche erstrecken. Eine zentrale Scheibe, an der die Traktionsarme befestigt sind, wird über einen Achsstummel, der mit einer Fahrzeugnabe verbunden ist, befestigt. Aus der US 4 278 122 A ist eine Gleitschutzvorrichtung mit Haken bekannt, die in Öffnungen einer Felge eingehakt werden. Die Gleitschutzvorrichtung stützt sich mit einer Gewindestange an der Achse des Fahrzeugs ab.

Eine weitere Befestigung einer Gleitschutzvorrichtung am Zentralbereich eines Fahrzeugrades ist aus der WO2020/239379 bekannt. Hierbei kommt ein zentraler Spannadapter zum Einsatz, der in eine auf der Radachse liegende Vertiefung eingreift.

Der Erfindung liegt also die Aufgabe zugrunde, einen Zubehöradapter der oben genannten Art bereitzustellen, der die Montage von Kraftfahrzeugzubehör auch dann erlaubt, wenn die Befestigung an einer Radschraube oder Radmutter nicht möglich oder nicht gewünscht ist. Insbesondere soll der Zubehöradapter die Möglichkeit bieten, Kraftfahrzeugzubehör an einem Kraftfahrzeug zu befestigen, dessen Radnaben mit einem Zentralgewinde versehen sind, insbesondere Zentralgewinde, welche durch Mittenbohrungen der Radfelgen zugänglich sind.

Diese Aufgabe ist für den eingangs genannten Zubehöradapter dadurch gelöst, dass der Zubehöradapter einen Gewindeabschnitt und einen Halteabschnitt umfasst, wobei der Gewindeabschnitt ausgestaltet ist, mit einem Zentralgewinde der Radnabe des Kraftfahrzeugs verschraubt zu werden und der Halteabschnitt ausgestaltet ist, das Kraftfahrzeugzubehör, insbesondere verliersicher, zu halten, und wobei der Zubehöradapter ein Gewindeteil und ein Spannteil aufweist, wobei das Gewindeteil den Gewindeabschnitt aufweist und das Spannteil ausgestaltet ist, mit dem Gewindeteil verspannt zu werden, und wobei das Spannteil als zur Anlage an der Fahrzeugnabe und/oder einer Fahrzeugfelge ausgestaltete Ringscheibe gebildet ist.

Beispiele für Kraftfahrzeugzubehör sind Schneeketten oder andere Gleitschutzmittel, Felgenschutzabdeckungen oder Fahrzeugzelte.

Die erfindungsgemäße Lösung erlaubt es, Kraftfahrzeugzubehör auch an Kraftfahrzeugen zu befestigen, bei denen die Befestigung an Radschrauben oder Radmuttern nicht möglich oder nicht gewünscht ist. Insbesondere ist der erfindungsgemäße Zubehöradapter dazu geeignet, Kraftfahrzeugzubehör an einem Kraftfahrzeug zu befestigen, dessen Radnaben mit Zentralgewinden versehen sind. Dabei ist bevorzugt jedes Zentralgewinde durch eine Mittenbohrung der jeweiligen Radfelge zugänglich. Das Zentralgewinde der Radnabe kann eine Innen- oder ein Außengewinde aufweisen.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen.

Beispielsweise kann der Gewindeabschnitt des Gewindeteils auf das Zentralgewinde der Radnabe geschraubt werden. Das Spannteil kann dann so mit dem Gewindeteil verspannt werden, dass das Gewindeteil gekontert ist. Dadurch kann ein unbeabsichtigtes Lösen vom Zentralgewinde verhindert werden.

Zum Verspannen des Spannteils mit dem Gewindeteil kann der Zubehöradapter wenigstens einen Spannmechanismus aufweisen, der ausgestaltet ist, das Gewindeteil gegenüber dem Spannteil, insbesondere in axialer Richtung, zu verspannen. Hierauf ist weiter unten eingegangen.

Um einen einfachen Aufbau zu erreichen und um Unwuchten zu vermeiden, kann das Gewindeteil und/oder das Spannteil ringförmig sein. Das oder die ringförmigen Teile sind bevorzugt im montierten Zustand koaxial mit einer Mittenachse des Gewindes im Gewindeabschnitt angeordnet. Gleichzeitig ist die Mittenachse des Gewindes im Gewindeabschnitt bevorzugt koaxial mit dem Zentralgewinde der Radnabe angeordnet. Das Gewindeteil und/oder das Spannteil können insbesondere die Form einer Ringscheibe aufweisen.

Um eine gleichmäßige Anlage des Spannteils an der Fahrzeugnabe und/oder eines Abschnitts einer Fahrzeugfelge zu erlauben, ist das Spannteil vorzugsweise als Ringscheibe gebildet.

Das als Ringscheibe gebildete Spannteil kann in einem am Fahrzeug montierten Zustand das Zentralgewinde umgeben. Mit anderen Worten kann das Zentralgewinde durch die Ringscheibe hindurchragen. In einem montierten Zustand kann das als Ringscheibe gebildete Spannteil zwischen der Radnabe und dem Gewindeteil angeordnet sein. Dabei ist das Spannteil koaxial mit dem Gewinde des Gewindeabschnitts angeordnet.

Das Spannteil, insbesondere ein als Ringscheibe gebildetes Spannteil, ist vorzugsweise zwischen dem Gewindeabschnitt und dem Halteabschnitt angeordnet. Mit anderen Worten kann das Gewindeteil, insbesondere wenn dieses ein Außengewinde aufweist, das Spannteil durchdringen. Zur Montage an der Radnabe kann das Gewindeteil in ein als Innengewinde ausgestaltetes Zentralgewinde geschraubt werden. Das Spannteil ist dann zwischen einem axialen Ende des Zentralgewindes und dem Halteabschnitt des Zubehöradapters angeordnet.

Gemäß einer weiteren Verbesserung des Zubehöradapters kann das Spannteil den Halteabschnitt aufweisen. Dadurch kann ein einfacher Aufbau erreicht werden. Bei dieser Ausführungsform kann zuerst das Gewindeteil auf das Zentralgewinde der Radnabe geschraubt werden. Anschließend kann das Spannteil auf das Zentralgewinde gesetzt und gegen das Gewindeteil verspannt werden. Dadurch ist das Gewindeteil gegen unbeabsichtigtes Lösen gesichert.

Es ist ebenfalls möglich, Gewindeteil und Spannteil als eine miteinander verbundene Einheit auf das Zentralgewinde zu schrauben. Insbesondere können bei dieser Ausführungsform Spannteil und Gewindeteil durch einen Spannmechanismus unverlierbar miteinander verbunden sein. Der Zubehöradapter kann dabei mit dem Gewindeteil voran auf das Zentralgewinde geschraubt werden. Sobald das Spannteil am Zentralgewinde anliegt, kann das Spannteil mit dem Gewindeteil verspannt werden.

Gemäß einer alternativen Ausführungsform kann das Gewindeteil den Gewindeabschnitt und den Halteabschnitt aufweisen. Hierdurch kann ein kompakter Aufbau erreicht werden. Das Spannteil ist in diesem Fall bevorzugt ringscheibenförmig. Es kann, je nach Ausgestaltung des Zubehöradapters und der Radnabe zur Montage des Zubehöradapters entweder über das Gewindeteil des Zubehöradapters oder über das Zentralgewinde der Radnabe geschoben werden. Anschließend kann der Gewindeabschnitt des Zubehöradapters mit dem Zentralgewinde der Radnabe verschraubt werden. Abschließend können das Gewindeteil und das Spannteil so miteinander verspannt werden, dass das Gewindeteil gegen unbeabsichtigtes Lösen gekontert ist.

Das Spannteil oder das Gewindeteil können einen Anschlag zur Anlage an der Radnabe, insbesondere zur Anlage an einem axialen Ende des Zentralgewindes, aufweisen. Weist das Zentralgewinde ein Außengewinde auf, so kann der Anschlag als ein Abschnitt des Spannteils oder des Gewindeteils gebildet sein, dessen Durchmesser kleiner als der Außendurchmesser des Zentralgewindes ist. Ist das Zentralgewinde dagegen ein Innengewinde, kann der Anschlag als ein Abschnitt gebildet sein, dessen Durchmesser größer als der Durchmesser des Zentralgewindes ist. Durch den Anschlag kann zum einen die Position definiert werden, bis zu der der Zubehöradapter oder zumindest der Gewindeabschnitt mit dem Zentralgewinde der Radnabe verschraubt wird. Darüber hinaus kann der Anschlag auch als Widerlager zum Verspannen von Spannteil und Gewindeteil dienen.

Der Anschlag kann in einem montierten Zustand des Zubehöradapters an der Radnabe anliegen. Durch das bei der Montage aufgebrachte Anzugsdrehmoment kann der Anschlag gegen die Radnabe gepresst sein, wodurch der Zubehöradapter ausreichend gegen unbeabsichtigtes Lösen gesichert sein kann. Gemäß einer vorteilhaften Ausgestaltung kann der Anschlag als eine über das Gewindeteil radial vorspringende Schulter des Zubehöradapters gebildet sein. Die Schulter kann entlang einer Umfangsrichtung des Zubehöradapters um diesen umlaufen. Die Schulter kann beispielsweise Teil eines zylindrischen oder ringförmigen Abschnitts des Zubehöradapters sein.

Gemäß einer weiteren vorteilhaften Ausgestaltung des Zubehöradapters weist dieser wenigstens einen Spannmechanismus auf, der ausgestaltet ist, in einem verspannten Zustand des Zubehöradapters einen Zug oder einen Druck zwischen dem Gewindeteil und dem Spannteil zu erzeugen, insbesondere dann, wenn das Gewindeteil und/oder das Spannteil mit dem Zentralgewinde der Radnabe verbunden sind.

Ein einfach aufgebauter Spannmechanismus kann dadurch erhalten werden, dass dieserwenigstens eine Schraube und ein Gewinde für die wenigstens eine Schraube in dem Gewindeteil oder in dem Spannteil umfasst, wobei die Schraube sich im verspannten Zustand am Gewindeteil und am Spannteil abstützt.

Die wenigstens eine Schraube kann insbesondere eine Madenschraube sein. Bei einer Ausführungsform, bei der das Gewindeteil die Form einer Ringscheibe hat und auf ein als Außengewinde gebildetes Zentralgewinde geschraubt wird, kann beispielsweise das Spannteil, das den Halteabschnitt aufweist, an einem axialen Ende des Zentralgewindes anliegen. Wenigstens eine Schraube des Spannmechanismus kann dann einen Zug zwischen Spannteil und Gewindeteil erzeugen, wobei das Spannteil gegen das axiale Ende des Zentralgewindes gezogen und das Gewindeteil in axialer Richtung zum Spannteil hin gezogen wird. Dadurch wird ein Reibschluss zwischen dem Gewinde am Gewindeteil und dem Zentralgewinde erzeugt, der ein unbeabsichtigtes Lösen des Gewindeteils vom Zentralgewinde verhindert.

In einer Ausführungsform, bei der das Spannteil als Ringscheibe gebildet ist, kann es beispielsweise über ein als Außengewinde gebildetes Zentralgewinde geschoben werden. Anschließend kann das Gewindeteil mit dem Gewindeabschnitt auf das Zentralgewinde geschraubt werden. Um den Zubehöradapter zu sichern, kann dann mit wenigstens einer Schraube ein Druck zwischen dem Spannteil und dem Gewindeteil erzeugt werden. Dabei ist vorzugsweise das Gewindeteil mit einem Gewinde für die Schraube versehen. Diese Schraube ragt durch das Gewindeteil durch und liegt mit seinem freien Ende am Spannteil an. Sobald das Spannteil an einem Teil der Radnabe oder Radfelge anliegt und Druck mit der Schraube zwischen Spannteil und Gewindeteil erzeugt wird, wird ein Druck in axialer Richtung vom Gewindeabschnitt gegen das Zentralgewinde erzeugt, sodass beide Gewinde reibschlüssig miteinander gehalten und dadurch gekontert sind.

In einer weiteren Ausführungsform, bei der das Zentralgewinde ein Innengewinde ist, kann ein als Ringscheibe ausgebildetes Spannteil am axialen Ende des Zentralgewindes anliegen. Ein Außengewinde des Gewindeteils kann dabei durch das Spannteil hindurchragen und in das Innengewinde eingeschraubt sein. Anschließend kann das ringscheibenförmige Spannteil durch wenigstens eine Schraube gegen das axiale Ende des Zentralgewindes gedrückt werden, bis auch hier ein Reibschluss zwischen dem Gewindeabschnitt und dem Zentralgewinde hergestellt ist.

Um ein sicheres Verspannen zu gewährleisten, weist der Spannmechanismus bevorzugt zwei Schrauben auf, deren Mittenachsen parallel zu einer Mittenachse des Gewindes im Gewindeabschnitt verlaufen. Besonders bevorzugt liegen sich die beiden Schrauben diametral über die Mittenachse des Gewindes im Gewindeabschnitt gegenüber.

Um ein Kraftfahrzeugzubehör auf einfache Weise mit dem Halteabschnitt zu verbinden, weist der Halteabschnitt bevorzugt wenigstens eine Öse zur Befestigung des Zubehörs auf.

Um eine besonders einfache und sichere Öse zu erhalten, ist die wenigstens eine Öse bevorzugt durch zwei voneinander beabstandete Backen des Halteabschnitts und wenigstens einen die Backen verbindenden Bolzen gebildet. Der Bolzen kann dabei durch eine oder beide Backen durchgesteckt sein. Mit dem Begriff Öse ist hier die Begrenzung für eine Durchgangsöffnung gemeint, durch die zumindest ein Teil eines Kraftfahrzeugzubehörs durchgeführt werden kann.

Bevorzugt sind, sofern die Backen am Spannteil angeordnet sind, die Backen und das übrige Spannteil monolithisch miteinander gebildet. Sind die Backen dagegen am Gewindeteil angeordnet, sind sie bevorzugt monolithisch mit dem Gewindeteil gebildet. Die Backen können Zylinderwandabschnitte bilden, welche durch den wenigstens einen Bolzen miteinander verbunden sind.

Durch die Form der Zylinderwandabschnitte können die Backen einen Schutz für den Bolzen und insbesondere für ein am Bolzen befestigtes Teil eines Kraftfahrzeugzubehörs bilden.

Die Erfindung betrifft auch einen Satz, umfassend eine Zentralverschlussschraube für eine Zentralverschlussfelge und wenigstens einen Zubehöradapter der oben genannten Art, wobei die Zentralverschlussschraube, insbesondere an einer axial außenliegenden Seite derselben, wenigstens ein zur Befestigung des Gewindeabschnitts des Zubehöradapters ausgestaltetes Gewinde aufweist. Das Gewinde kann ein Innen- oder ein Außengewinde sein.

Der Satz kann ferner ein Sicherungselement umfassen, das ausgestaltet ist, mit einer Fahrzeugnabe und mit der Zentralverschlussschraube in Eingriff gebracht zu werden, insbesondere wiederholt lösbar in Eingriff gebracht zu werden. Dadurch kann eine unbeabsichtigte Drehung der Zentralverschlussschraube relativ zur Fahrzeugnabe, beispielsweise während der Fahrt, verhindert werden. Das Sicherungselement kann das wenigstens eine Gewinde zur Befestigung des Gewindeabschnitts des Zubehöradapters aufweisen.

In einer Vorzugsposition des Sicherungselements ist es sowohl mit der Fahrzeugnabe als auch mit der Zentralverschlussschraube in Eingriff. Dieser Eingriff kann einen Formschluss in Bezug auf die Drehung um die Radachse herstellen, wodurch die Drehung der Zentralverschlussschraube relativ zur Fahrzeugnabe verhindert werden kann.

Das Sicherungselement ist bevorzugt im radialen Zentrum der Zentralverschlussschraube angeordnet, zumindest in der Vorzugsposition. Das Sicherungselement kann mit einem Rückstellorgan verbunden oder versehen sein, insbesondere mit einer Feder, dass dazu ausgestaltet ist, das Sicherungselement in die Vorzugsposition zu bewegen.

Der Eingriff des Sicherungselements mit der Fahrzeugnabe kann dauerhaft bestehen. Das Sicherungselement kann also derart mit der Fahrzeugnabe verbunden sein, dass es in Bezug auf eine Rotation um die axiale Richtung starr mit der Fahrzeugnabe verbunden ist. Entlang der axialen Richtung kann es dagegen relativ zur Fahrzeugnabe verschieblich gehalten sein. Das Sicherungselement kann Teil der Fahrzeugnabe sein und an dieser verbleiben, wenn die Zentralverschlussschraube abgenommen wird. Alternativ dazu kann das Sicherungselement Teil der Zentralverschlussschraube sein und an dieser verbleiben.

Um den Eingriff des Sicherungselements mit der Zentralverschlussschraube zu lösen und das Sicherungselement aus der Vorzugsposition zu bewegen, muss zunächst eine Federkraft des Rückstellorgans überwunden werden. Anschließend kann die Zentralverschlussschraube gedreht werden, um ein Fahrzeugrad zu befestigen oder abzunehmen.

Um zu verhindern, dass das Sicherungselement unbeabsichtigt gelöst wird, beispielsweise durch einen Druck auf den montierten Zubehöradapter in Richtung auf die Radnabe, kann der Zubehöradapter mit wenigstens einer Ringscheibe versehen sein, durch die der Zubehöradapter in einem an der Radnabe montierten Zustand zumindest abschnittsweise ragt. Die Ringscheibe ist bevorzugt ausgestaltet, im montierten Zustand an der Radnabe anzuliegen und eine Bewegung des Zubehöradapters in Richtung zur Radnabe zu verhindern.

Das Sicherungselement kann mit einem Gewinde zur Anbringung eines erfindungsgemäßen Zubehöradapters versehen sein. Beispielsweise kann das Sicherungselement mit einer zentralen Bohrung versehen sein, die bevorzugt koaxial mit der Zentralverschlussschraube und damit mit der Achse des Fahrzeugrads verläuft. Diese Bohrung kann mit einem Innengewinde versehen sein, in das sich ein Zubehöradapter einschrauben lässt. Alternativ dazu kann das Sicherungselement auch mit einem nach außen vorspringenden Außengewinde versehen sein, an das sich ein Zubehöradapter mit einem Innengewinde montieren lässt.

Die Erfindung betrifft auch einen Gleitschutzsatz umfassend ein Gleitschutzmittel und einen Zubehöradapter im Sinne der Erfindung. Der Zubehöradapter kann bereits mit dem Gleitschutzmittel verbunden sein.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen können nach Maßgabe der obigen Ausführungen entsprechend den für einen bestimmten Anwendungsfall notwendigen Eigenschaften des erfindungsgemäßen Zubehöradapters durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1: beispielhaft eine perspektivische Darstellung eines Zentralgewindes in einer Mittenbohrung einer Radfelge;
- Fig. 2: eine semitransparente Explosionsdarstellung einer ersten vorteilhaften Ausführungsform des Zubehöradapters;
- Fig. 3: eine perspektivische Explosionsdarstellung des Zubehöradapters der Fig. 2;
- Fig. 4: eine perspektivische Darstellung des Zubehöradapters aus Fig. 2 in einem zusammengesetzten Zustand;
- Fig. 5: eine schematische Schnittdarstellung des Zubehöradapters aus Fig. 2 in einem an dem Zentralgewinde montierten Zustand;
- Fig. 6: eine perspektivische Darstellung des Zubehöradapters der Fig. 2 in einem am Zentralgewinde montierten Zustand;
- Fig. 7: eine zweite vorteilhafte Ausführungsform des Zubehöradapters in einer semitransparenten Explosionsdarstellung;
- Fig. 8: den Zubehöradapter aus Fig. 7 in einem zusammengesetzten Zustand in einer semitransparenten perspektivischen Darstellung;
- Fig. 9: den Zubehöradapter aus Fig. 7 in einer schematischen Schnittdarstellung in einem am Zentralgewinde montierten Zustand;
- Fig. 10: eine dritte Ausführungsform eines Zubehöradapters und einen Ausschnitt einer Radfelge, durch die ein Zentralgewinde mit Innengewinde ragt;
- Fig. 11: den Zubehöradapter aus Fig. 10 in einer semitransparenten Seitenansicht;
- Fig. 12: den Zubehöradapter aus Fig. 10 in einer perspektivischen Darstellung;
- Fig. 13: den Zubehöradapter aus Fig. 10 in einer semitransparenten Explosionsdarstellung;
- Fig. 14: eine Zentralverschlussfelge und eine Zentralverschlussschraube;
- Fig. 15: die Zentralverschlussschraube der Fig. 14 in einer perspektivischen Darstellung;
- Fig. 16: die Zentralverschlussschraube aus Fig. 14 in einer semitransparenten Seitenansicht;
- Fig. 17: die Zentralverschlussschraube aus Fig. 14 mit einem darin eingesetzten Zubehöradapter gemäß der Fig. 10;
- Fig. 18: eine weitere Ausführungsform einer Zentralverschlussschraube zur Verbindung eines Zubehöradapters in einer perspektivischen Schnittdarstellung;
- Fig. 19: die Zentralverschlussschraube aus Fig. 18 mit einem angedeuteten eingesetzten Zubehöradapter;
- Fig. 20: schematisch die Nutzung eines Zubehöradapters zur Befestigung eines Gleitschutzmittels; und
- Fig. 21: schematisch die Verwendung erfindungsgemäßer Zubehöradapter zur Befestigung eines Fahrzeugzelts an einem Kraftfahrzeug.

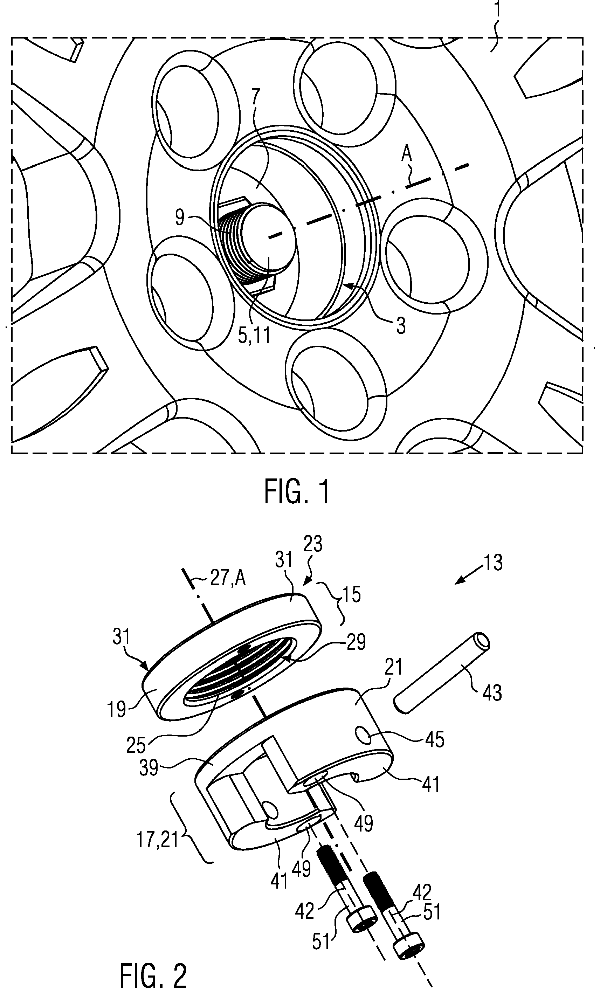

Fig. 1 zeigt beispielhaft einen Ausschnitt einer Radfelge 1 mit einer Mittenbohrung 3. Die Mittenbohrung 3 erstreckt sich entlang einer axialen Richtung A durch die Radfelge 1. Durch die Mittenbohrung 3 ist ein Zentralgewinde 5 zugänglich, welches in der Regel Teil der Radnabe 7 ist. Alternativ dazu kann das Zentralgewinde 5 auch Teil der Felge 1 sein.

Lediglich beispielhaft ist das Zentralgewinde 5 als ein mit einem Außengewinde 9 versehener Zylinder 11 dargestellt. Die axiale Richtung A fällt zusammen mit einer Achsrichtung des Fahrzeugrads (nicht dargestellt) und gibt auch die Drehachse für die Radfelge 1 beziehungsweise des Fahrzeugrads, zu dem die Felge gehört, vor.

Im Folgenden ist eine erste vorteilhafte Ausführungsform eines Zubehöradapters 13 mit Bezug auf die Figuren 2 bis 6 beschrieben. Dabei wird auch auf die obigen Beschreibungen mit Bezug auf die Radfelge 1 zurückgegriffen.

Der Zubehöradapter 13 weist einen Gewindeabschnitt 15 und einen Halteabschnitt 17 auf. Der Gewindeabschnitt 15 dient zur Verschraubung mit dem Zentralgewinde 5. Der Halteabschnitt 17 dient zum Halten, bzw. zur Befestigung, von Kraftfahrzeugzubehör 127 (hier noch nicht dargestellt).

Der Zubehöradapter 13 weist ein Gewindeteil 19 und ein Spannteil 21 auf. Das Gewindeteil 19 weist den Gewindeabschnitt 15 auf. Bei der ersten Ausführungsform des Zubehöradapters 13 weist das Spannteil 21 den Halteabschnitt 17 auf.

Das Gewindeteil 19 hat insgesamt die Form einer Ringscheibe 23. Das ringscheibenförmige Gewindeteil 19 ist mit einem Innengewinde 25 versehen, welches komplementär zu dem als Außengewinde 9 gebildeten Zentralgewinde 5 geformt ist. Folglich fällt eine axiale Richtung 27 des Zubehöradapters 13, die die zentrale Achse für die Ringscheibe 23 vorgibt, mit der axialen Richtung A des Zentralgewindes 5 zusammen, wenn der Zubehöradapter 13 am Zentralgewinde 5 angebracht ist. Der Einfachheit halber wird im Folgenden auf die axiale Richtung A zurückgegriffen.

Das Innengewinde 25 begrenzt die zentrale Öffnung 29 der Ringscheibe und ist mittig bzw. konzentrisch in der Ringscheibe 23 angeordnet.

Zusätzlich zu der Ringöffnung 29 ist die Ringscheibe 23 mit zwei weiteren parallel zur axialen Richtung A sich durch das Gewindeteil 19 erstreckenden Bohrungen 31 versehen. Die Bohrungen 31 sind ebenfalls mit Innengewinden 33 versehen und können zu einem Spannmechanismus 40 des Zubehöradapters 13 gehören. Die Bohrungen 31 sind sich über die Ringöffnung 29 diametral gegenüberliegend angeordnet und erstrecken sich parallel zueinander und parallel zur axialen Richtung A durch das Material des Gewindeteils 19.

Das Spannteil 21 weist, in axialer Richtung A gesehen, eine runde Außenform auf, so dass es zumindest abschnittsweise hohlzylinderförmig ist. Es erstreckt sich dabei koaxial mit dem Gewindeteil 19. Bevorzugt sind die sich entlang der axialen Richtung A erstreckenden Außenkonturen des Spannteils 21 und des Gewindeteils 19 so geformt, dass sie sich zu einem gedachten gemeinsamen Zylinder ergänzen. Mit anderen Worten weisen sie gleiche Außendurchmesser auf. Dabei sind die Teile 19 und 21 vorzugsweise so bemessen, dass sie im am Kraftfahrzeug montierten Zustand Herstellerlogos oder andere Applikationen auf der Radfelge 1 nicht verdecken.

Wie bereits oben erwähnt, weist das Spannteil 21 den Halteabschnitt 17 auf. Im Folgenden ist kurz auf den Halteabschnitt 17 eingegangen.

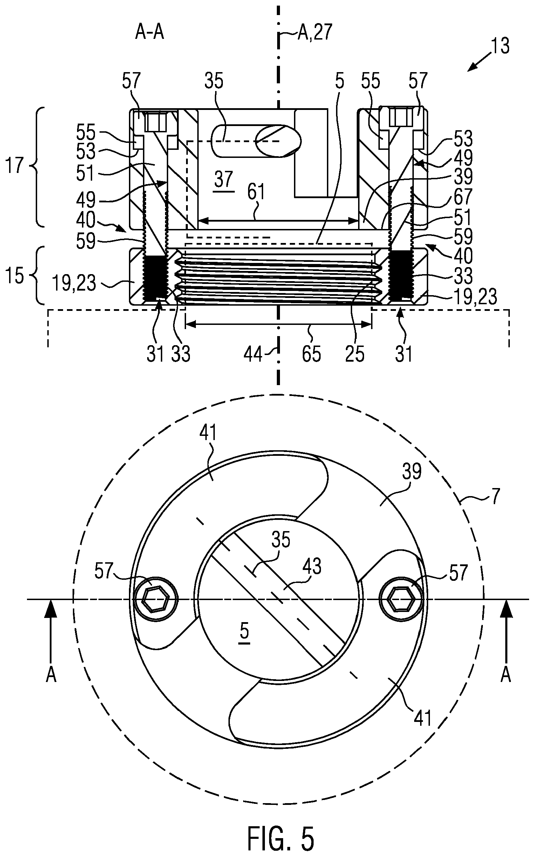

Der Halteabschnitt 17 dient zum Halten, insbesondere zum verliersicheren Halten, von Kraftfahrzeugzubehör 127 (hier noch nicht gezeigt). Dazu weist der Zubehöradapter 13 im Halteabschnitt 17 eine Öse 35 auf. Die Öse 35 ist in Fig. 5 gestrichelt angedeutet. Die Öse 35 begrenzt eine Durchgangsöffnung 37, durch die zumindest ein Abschnitt des zu haltenden Kraftfahrzeugzubehörs geführt werden kann.

Die Öse 35 ist zusammengesetzt aus einer ringscheibenförmigen Basis 39 des Spannteils 21, zwei von der Basis 39 parallel zur axialen Richtung A vorspringenden Backen 41 und einem Bolzen 43, der die beiden Backen 41 miteinander verbindet. Die beiden Backen 41 können dazu mit Öffnungen 45 versehen sein, durch die der Bolzen 43 gesteckt sein kann. Der Bolzen 43 kann mit geeigneten Befestigungsmitteln mit den Backen 41 verbunden sein.

Die beiden Backen 41 haben, entlang der axialen Richtung A gesehen, jeweils die Form eines Ringabschnitts. Dadurch kann der Bereich der Durchgangsöffnung 37 der Öse 35, in dem sich ein Abschnitt des Kraftfahrzeugzubehörs befinden kann, nach außen geschützt sein.

An jeweils einem ihrer in Umfangsrichtung U liegenden Enden 47 ist jede der Backen 41 mit einer Bohrung 49 versehen. Die Innenseiten der Bohrungen 49 sind vorzugsweise glatt. Die Bohrungen 49 dienen zum Durchführen von Schrauben 51.

Jede der Bohrungen 49 ist bevorzugt mit einem ringförmigen Absatz 53 versehen, an dem sich die Bohrung 49 zu einer Schraubenkopfaufnahme 55 für je einen Schraubenkopf 57 öffnet. Im Bereich der Schraubenkopfaufnahme 55 ist der Innendurchmesser der Bohrung 49 größer als im übrigen Teil.

Ein Schraubenkopf 57 der Schraube 51 kann einen Durchmesser aufweisen, der es ihm erlaubt, in die Schraubenkopfaufnahme 55 eingesetzt zu werden, der aber verhindert, dass der Schraubenkopf 57 in die übrige Bohrung 49 gelangt. Stattdessen kommt der Schraubenkopf 57 auf dem Absatz 53 zu liegen und kann sich an diesem abstützen. Alternativ dazu kann die Bohrung 49 auch mit einem durchgängig gleichen Innendurchmesser gebildet sein, so dass ein Schraubenkopf 57 außen an der Backe 41 zu liegen kommen kann.

Die Schrauben 51 sind bevorzugt an ihren den Schraubenköpfen 57 gegenüberliegenden Enden mit Außengewinden 59 versehen, die komplementär zu den Innengewinden 33 der Bohrungen 31 im Gewindeteil gebildet sind. Die Schrauben 51 und die Gewinde 33 gehören zum Spannmechanismus 40.

Mittenachsen 42 der Schrauben 51 verlaufen parallel zu einer Mittenachse 44 des Innengewindes 25. Die Mittenachse 44 des Innengewindes 25 fällt vorzugsweise mit den axialen Richtungen 27 und A zusammen.

Die ringscheibenförmige Basis 39 des Spannteils 21 ist vorzugsweise so bemessen, dass sie an einem axial außen liegenden Ende des Zentralgewindes 5 zu liegen kommen kann, ohne dass das Zentralgewinde 5 in das Spannteil 21 eindringen kann. Mit anderen Worten ist ein Innendurchmesser 61 der Ringöffnung 63 des Spannteils 21 kleiner als ein Außendurchmesser 65 des Zentralgewindes 5. Dadurch weist das Spannteil 21 einen Anschlag 67 für das Zentralgewinde 5 auf.

Im Folgenden ist kurz die Montage der ersten Ausführungsform des Zubehöradapters 13 an der Radnabe 7 beschrieben.

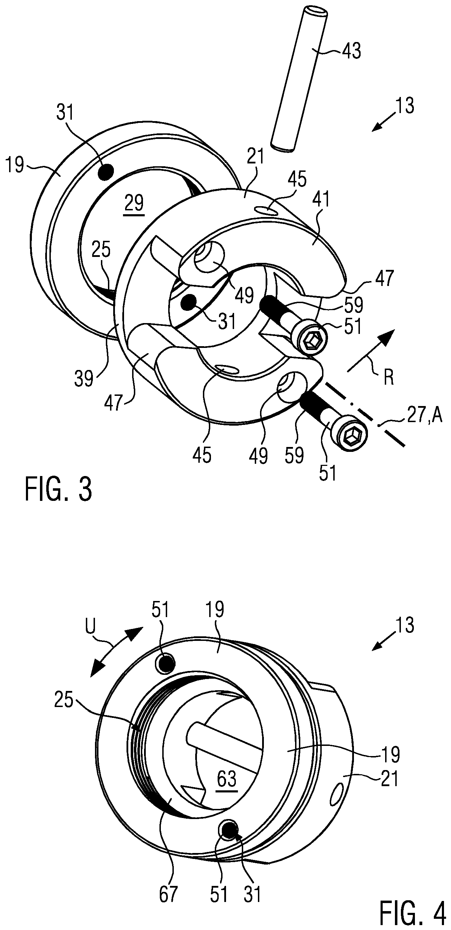

Vorzugsweise wird der Zubehöradapter 13 in einem zusammengesetzten Zustand, wie er beispielsweise in Fig. 4 dargestellt ist, mit dem Gewindeteil 19 voran auf das Zentralgewinde 5 gesetzt und das Innengewinde 25 des Gewindeteils 19 mit dem Außengewinde 9 des Zentralgewindes 5 verschraubt. Dazu wird der gesamte Zubehöradapter 13 gedreht.

Sobald das Spannteil 21 mit seinem Anschlag 67 am Zentralgewinde 5 angelangt ist, wird das Aufschrauben beendet. Es werden nun die Schrauben 51 so betätigt, dass das Spannteil 21 und das Gewindeteil 19 zueinander gezogen werden. Das Spannteil 21 kann sich durch die Anlage des Anschlags 67 am Zentralgewinde 5 an diesem abstützen und wird an einer Bewegung zum Gewindeteil 19 gehindert. Es entsteht ein Zug auf das Gewindeteil 19.

Das Gewindeteil 19 wird durch diesen Zug mit seinem Innengewinde 25 in axialer Richtung A gegen das Außengewinde 9 des Zentralgewindes 5 gepresst, so dass ein Reibschluss zwischen den beiden Gewinden hergestellt wird. Durch den Reibschluss wird eine Drehung des Zubehöradapters 13 um die axiale Richtung A herum verhindert. Zumindest wird die Drehung dabei soweit vermieden, dass sie bei einem vorschriftsgemäßen Gebrauch des Zubehöradapters 13 ausgeschlossen werden kann.

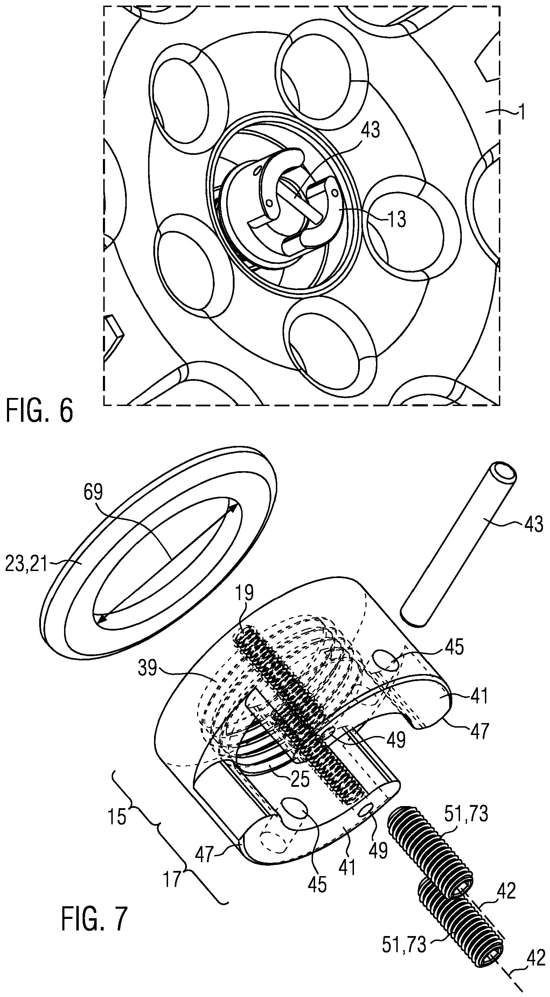

Der Zubehöradapter 13 ist nun an der Radnabe 7 befestigt. Dies ist in Fig. 6 dargestellt. In diesem Zustand kann ein Kraftfahrzeugzubehör 127, beispielsweise durch Einhängen an den Bolzen 43 befestigt werden.

Zum Lösen des Zubehöradapters 13 kann in umgekehrter Reihenfolge vorgegangen werden. Das heißt, zunächst werden die Schrauben 51 so weit gelöst, dass der Reibschluss zwischen dem Gewindeteil 19 und dem Zentralgewinde 5 gelöst wird. Anschließend kann der Zubehöradapter 13 so gedreht werden, dass das Gewindeteil 19 vom Zentralgewinde 5 abgeschraubt wird.

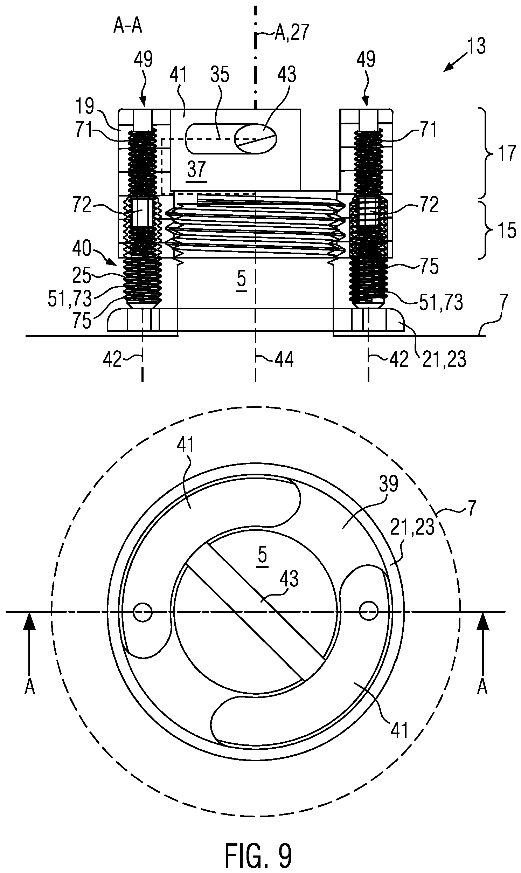

Im Folgenden ist eine zweite vorteilhafte Ausführungsform des erfindungsgemäßen Zubehöradapters 13 mit Bezug auf die Figuren 7 bis 9 beschrieben. Der Kürze halber ist dabei nur auf die Unterschiede zu der zuvor beschriebenen Ausführungsform eingegangen.

Die zweite Ausführungsform ist ebenfalls für eine Radnabe 7 mit einem als Außengewinde 9 gebildetes Zentralgewinde 5 vorgesehen. Bei dieser Ausführungsform weist jedoch das Gewindeteil 19 sowohl den Gewindeabschnitt 15 als auch den Halteabschnitt 17 auf. Das Spannteil 21 der zweiten Ausführungsform ist wie bei der ersten Ausführungsform als Ringscheibe 23 gebildet, jedoch ohne ein Innengewinde 25 und ohne zusätzliche Bohrungen 31.

Das Spannteil 21 ist so bemessen, dass es über das Zentralgewinde 5 geschoben werden kann. Mit anderen Worten ist ein Innendurchmesser 69 des ringscheibenförmigen Spannteils 21 größer als der Durchmesser 65 des Zentralgewindes 5.

Das Gewindeteil 19 der zweiten Ausführungsform ist mit dem Innengewinde 25 versehen, welches komplementär zum Außengewinde 9 gebildet ist. Das Gewindeteil 19 weist eine im Wesentlichen ringscheibenförmige Basis 39 auf, an deren Innenseite das Innengewinde 25 angeordnet ist. Von dieser Basis 39 springen, wie bei der ersten Ausführungsform, die beiden Backen 41 vor.

Die von dem Innengewinde 25 umgebene Ringöffnung 63 kann sich durchgängig entlang der axialen Richtung A durch das Gewindeteil 19 erstrecken. Mit anderen Worten kann auf einen Anschlag 67 verzichtet werden. Alternativ dazu kann zwischen dem Gewindeabschnitt 15 und dem Halteabschnitt 17 ein Anschlag vorhanden sein.

Wie bei der ersten Ausführungsform erstrecken sich an den Enden 47 der Backen 41 Bohrungen 49 durch das Material der Backen 41. Die Bohrungen 49 verlaufen parallel zur axialen Richtung A und liegen sich vorzugsweise diametral über die Ringöffnung 63 gegenüber. Im Gegensatz zur ersten Ausführungsform sind die Bohrungen 49 jedoch mit Innengewinden 71 versehen, die komplementär zu Außengewinden 75 von Schrauben 51 gebildet sind. Die Schrauben 51 können bevorzugt als Gewindestangen bzw. Madenschrauben 73 mit einem Schraubenantrieb 72 ausgestaltet sein. Der Schraubenantrieb 72 kann beispielsweise ein Innensechskant sein.

Wie bei der ersten Ausführungsform gehören die Schrauben 51 und die Innengewinde 71 zu einem Spannmechanismus 40 des Zubehöradapters 13.

Wie bei der ersten Ausführungsform verlaufen Mittenachsen 42 der Schrauben 51 parallel zu einer Mittenachse 44 des Innengewindes 25 im Gewindeabschnitt 15.

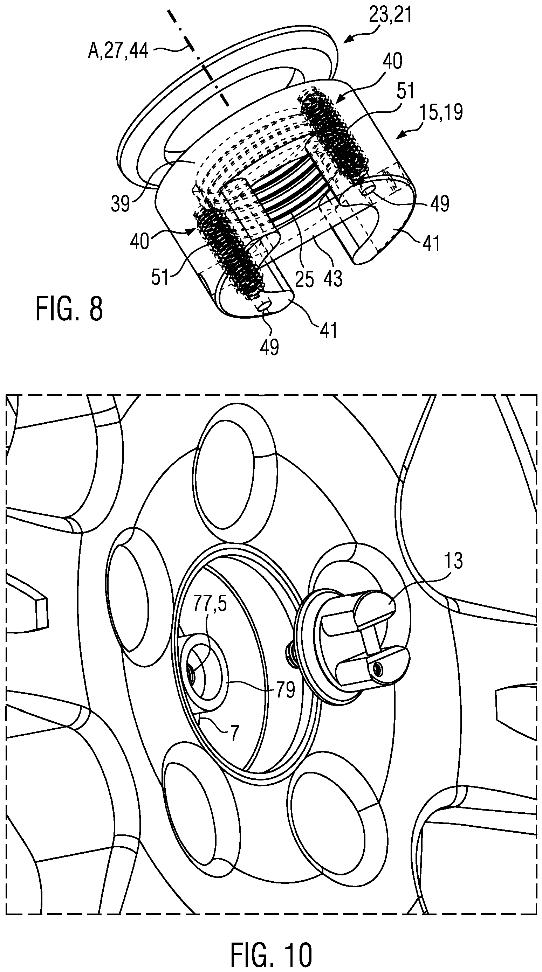

Im Folgenden ist kurz die Montage des Zubehöradapters an einem Zentralgewinde 5 beschrieben. Der Zubehöradapter 13 wird bevorzugt in einem zusammengesetzten Zustand, wie er beispielsweise in Fig. 8 dargestellt ist, montiert. Mit anderen Worten sind die Schrauben 51 vorzugsweise bereits in den Bohrungen 49 versenkt.

Zunächst wird das Spannteil 21 über das Zentralgewinde 5 geschoben. Anschließend wird das Gewindeteil 19 auf das Zentralgewinde 5 geschraubt, wobei dessen Innengewinde 25 mit dem Außengewinde 9 in Eingriff ist. Sind das Außengewinde 9 und das Innengewinde 25 ausreichend weit miteinander verschraubt, werden die Schrauben 51 betätigt und in Richtung auf die Radnabe 7 bewegt.

Die Schrauben 51 üben einen Druck auf das Spannteil 21 aus, wodurch das Spannteil 21 gegen einen das Zentralgewinde 5 umgebenden Abschnitt der Radnabe 7 gedrückt wird. Durch weiteres Betätigen der Schrauben 51 wird das Gewindeteil 19 zumindest ein stückweit von der Radnabe 7 weggedrückt, so dass ein Reibschluss des Innengewindes 25 mit dem Außengewinde 9 hergestellt wird. Dadurch ist das Gewindeteil 19 gekontert und gegen ein unabsichtliches Abschrauben vom Zentralgewinde 5 gesichert.

Anschließend kann ein Kraftfahrzeugzubehör 127 mit der Öse 35 verbunden werden. Zum Lösen des Zubehöradapters 13 wird in umgekehrter Reihenfolge vorgegangen. Das heißt, zunächst werden die Schrauben 51 gelöst. Anschließend wird das Gewindeteil 19 vom Zentralgewinde 5 abgeschraubt. Letztendlich wird noch das Spannteil 21 abgenommen.

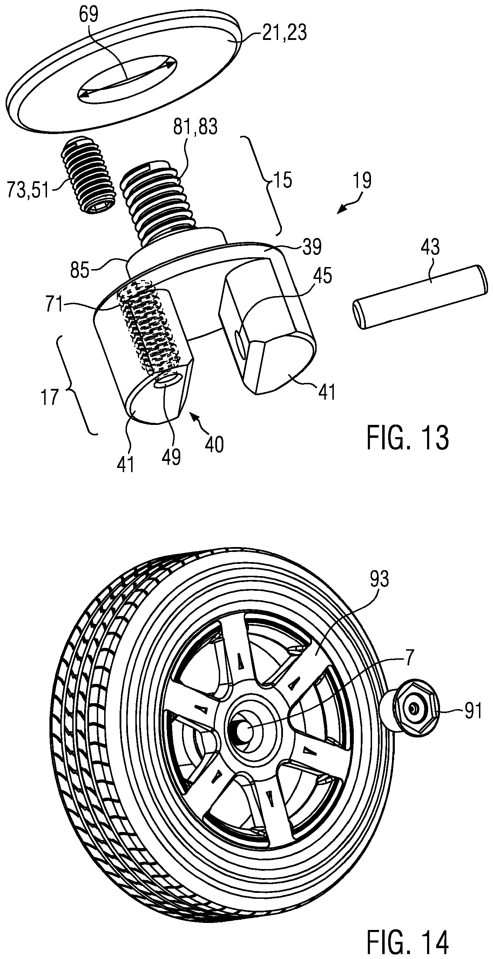

Im Folgenden ist eine dritte Ausführungsform des erfindungsgemäßen Zubehöradapters 13 mit Bezug auf die Figuren 10 bis 13 beschrieben. Auch hier ist, der Kürze halber, nur auf die Unterschiede zu den zuvor beschriebenen Ausführungsformen eingegangen.

Die dritte Ausführungsform des Zubehöradapters 13 ist für ein Zentralgewinde 5 vorgesehen, welches, im Gegensatz zu den zuvor beschriebenen Ausführungsformen, als Innengewinde 77 gebildet ist. Das Innengewinde 77 sitzt zentral in einem hohlzylindrischen Abschnitt 79 der Radnabe 7.

Der Zubehöradapter 13 der dritten Ausführungsform weist ein als Ringscheibe 23 gebildetes Spannteil 21 auf. Das Spannteil 21 ähnelt dem der zweiten Ausführungsform. Mit anderen Worten ist es weder mit einem zentralen Innengewinde, noch mit zusätzlichen Gewindebohrungen versehen.

Das Gewindeteil 19 der dritten Ausführungsform weist sowohl den Gewindeabschnitt 15 als auch den Halteabschnitt 17 auf. Der Gewindeabschnitt 15 ist mit einem Gewindebolzen 81 versehen, dessen Außengewinde 83 komplementär zum Innengewinde 77 der Radnabe 7 ist.

Zwischen dem Gewindeabschnitt 15 und dem Halteabschnitt 17 weist das Gewindeteil einen zylindrischen Übergangsabschnitt 85 auf. Der zylindrische Übergangsabschnitt 85 weist vorzugsweise einen Durchmesser 87 auf, welcher kleiner als der Innendurchmesser 69 des Spannteils 21 ist. Alternativ zu dem Übergangsabschnitt 85 kann sich der Gewindeabschnitt 15 auch bis zum Halteabschnitt 17 erstrecken.

Insbesondere in einem an einer Radnabe 7 montierten Zustand, ist das Spannteil 21 bevorzugt auf dem Übergangsabschnitt 85 angeordnet. Mit anderen Worten durchdringt der Übergangsabschnitt 85 das Spannteil 21. Übergangsabschnitt 85 und Innendurchmesser 69 sind bevorzugt so aufeinander abgestimmt, dass das Spannteil 21 mit wenig Spiel am Gewindeteil 19 anliegen kann, wobei sich das Spiel auf eine Bewegung quer zur axialen Richtung A bezieht.

Das Gewindeteil 19 weist eine Basis 39 auf, welche die Form einer Kreisscheibe haben kann. Die Basis 39 ist zwischen dem Übergangsabschnitt 85 und den Backen 41 angeordnet. Wenigstens eine der Backen 41 ist, wie bei den zuvor beschriebenen Ausführungsformen, mit einer Bohrung 45 versehen, um einen Bolzen 43 einsetzen zu können.

Eine der Backen 41 ist mit einer Bohrung 49 versehen, welche ein Innengewinde 71 aufweist. Die Bohrung 49 dient zur Aufnahme einer Schraube 51, welche vorzugsweise als Gewindebolzen oder Madenschraube 73 gebildet ist. Die Schraube 51 und die Bohrung 49 mit dem Innengewinde 71 sind Teil eines Spannmechanismus 40.

Alternativ zu der dargestellten Ausführungsform mit nur einer Bohrung 49, kann auch die zweite Backe 41 mit einer entsprechenden Bohrung 49 mit einem Innengewinde 71 versehen sein.

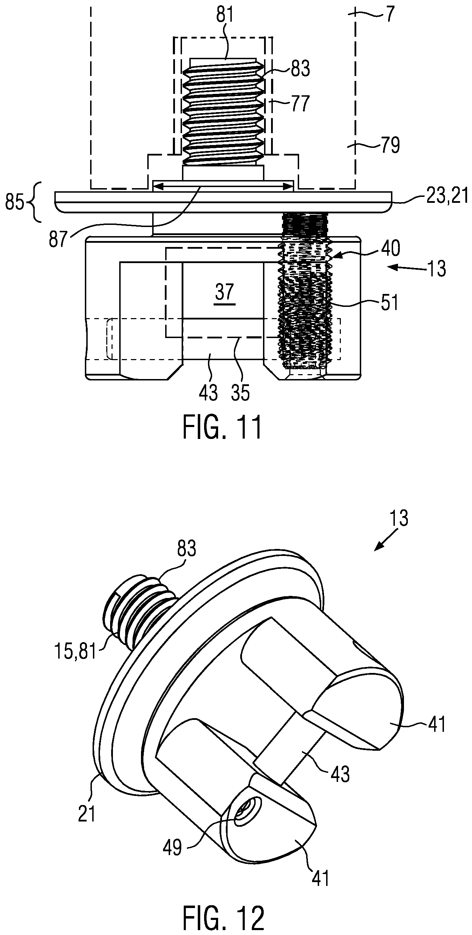

Die Funktionsweise der dritten Ausführungsform entspricht im Wesentlichen der der zweiten Ausführungsform. Im Folgenden ist kurz die Montage eines Zubehöradapters 13 der dritten Ausführungsform an einer Radnabe 7 beschrieben. Der Zubehöradapter 13 wird vorzugsweise zunächst zusammengesetzt. Ein zusammengesetzter Zustand ist beispielsweise in Fig. 12 dargestellt. Mit anderen Worten ist der Bolzen 43 in der wenigstens einen Bohrung 45 eingesetzt, die Ringscheibe 23 vom zylindrischen Übergangsabschnitt 85 durchdrungen und die Schraube 51 in der Bohrung 49 angeordnet.

Der Zubehöradapter 13 kann in diesem Zustand mit dem Zentralgewinde 5 verschraubt werden. Mit anderen Worten kann der Gewindebolzen 81 in das Innengewinde 77 der Radnabe 7 geschraubt werden.

Bevorzugt wird der Zubehöradapter 13 so weit in das Innengewinde 77 geschraubt, bis die Ringscheibe 23 am axial äußeren Ende des Abschnitts 79 der Radnabe 7 anliegt. Anschließend wird die Schraube 51 betätigt, so dass sie Druck auf die Ringscheibe 23 ausübt. Da die Ringscheibe 23 an der Radnabe 7 anliegt, erzeugt eine Betätigung der Schraube 51 einen Druck des Gewindeabschnitts 15 entlang der axialen Richtung A gegen das Innengewinde 77. Der Gewindeabschnitt 15 wird dadurch gegen ein Herausschrauben aus dem Innengewinde 77 gekontert. Dadurch ist der Zubehöradapter 13 sicher gehalten. Anschließend kann ein Kraftfahrzeugzubehör 127 an dem Bolzen 43 befestigt, bzw. durch die Öse 35 geführt werden.

Zum Lösen des Zubehöradapters 13 wird in umgekehrter Reihenfolge vorgegangen. Zunächst wird die Schraube 51 so weit von der Ringscheibe 23 wegbewegt, dass der Gewindeabschnitt 15 nicht mehr gekontert ist. Anschließen kann durch Drehung am Halteabschnitt 17 der Zubehöradapter 13 aus dem Innengewinde 77 herausgeschraubt werden.

Im Folgenden ist auf einen erfindungsgemäßen Satz 89 eingegangen. Der Satz 89 umfasst eine Zentralverschlussschraube 91 für eine Zentralverschlussfelge 93 und einen erfindungsgemäßen Zubehöradapter 13.

Lediglich beispielhaft ist die Zentralverschlussschraube 91 im Folgenden in Verbindung mit einem Zubehöradapter 13 der dritten Ausführungsform dargestellt. Selbstverständlich kann die Zentralverschlussschraube 91 auch derart ausgestaltet sein, dass ein Zubehöradapter 13 der ersten oder der zweiten Ausführungsform mit ihr verwendet werden kann.

Eine Zentralverschlussschraube 91 dient zur Befestigung einer Zentralverschlussfelge 93 an der Radnabe 7. Da das Zentralgewinde der Radnabe 7 für die Zentralverschlussschraube 91 verwendet wird, kann der Zubehöradapter 13 nicht direkt auf diese geschraubt werden.

Um trotzdem die Verwendung eines erfindungsgemäßen Zubehöradapters 13 zu ermöglichen, ist eine speziell ausgestaltete Zentralverschlussschraube 91 vorgesehen. Die Zentralverschlussschraube 91 weist ein Innengewinde 95 auf, mit dem sie an der Radnabe 7 verschraubt werden kann. Dazu weist die Zentralverschlussschraube 91 einen Antriebsabschnitt 97 auf, der zur Aufnahme eines entsprechend geformten Werkzeuges dient.

Um die Verwendung eines erfindungsgemäßen Zubehöradapters 13 zu ermöglichen, ist die Zentralverschlussschraube 91 mit einer Aufnahme 99 für einen Zubehöradapter 13 versehen. Die Aufnahme 99 ist bevorzugt komplementär zumindest zum Gewindeabschnitt 15 des Zubehöradapters 13 geformt. Die Aufnahme 99 ist bevorzugt konzentrisch zum Innengewinde 95 der Zentralverschlussschraube 91 angeordnet um eine mittige Aufnahme des Zubehöradapters 13 zu ermöglichen.

Die Aufnahme 99 kann mit einem Innengewinde 101 versehen sein, welches komplementär zum Außengewinde 83 des Gewindebolzens 81 geformt ist. Die Aufnahme 99 kann darüber hinaus noch einen Abschnitt 103 aufweisen, der komplementär zum zylindrischen Übergangsabschnitt 85 gebildet ist. Letztendlich kann die Aufnahme 99 auch einen Abschnitt 105 aufweisen, der komplementär zur Ringscheibe 23 gebildet ist und diese aufnehmen kann.

Zum Einsetzen des Zubehöradapters 13 in die Zentralverschlussschraube 91 wird genauso vorgegangen, wie bei dem direkten Einsetzen des Zubehöradapters 13 in die Radnabe 7. Der Unterschied besteht lediglich darin, dass der Zubehöradapter 13, bzw. dessen Gewindeabschnitt 15, mit dem Innengewinde 101 der Zentralverschlussschraube 91 und nicht mit dem Zentralgewinde 5 verschraubt wird. Anschließend kann der Zubehöradapter 13 wie zuvor beschrieben verwendet werden.

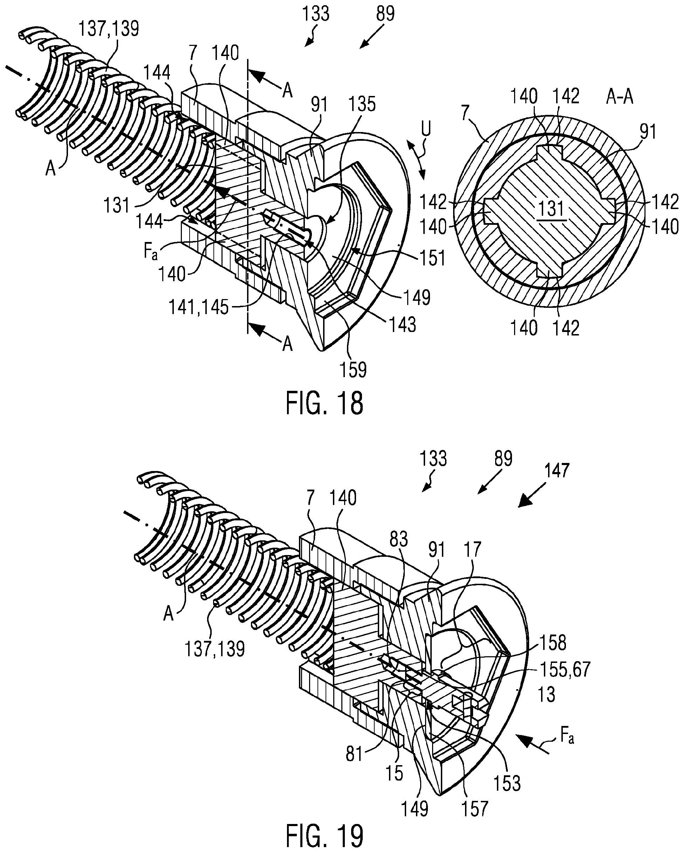

Eine zweite Ausführungsform eines erfindungsgemäßen Satzes 89 ist in den Figuren 18 und 19 dargestellt, auf die im Folgenden Bezug genommen wird.

Die Zentralverschlussschraube 91 der zweiten Ausführungsform ist mit einem Sicherungselement 131 versehen, das dazu dient, ein unbeabsichtigtes Lösen der Zentralverschlussschraube 91 zu verhindern. Dazu ist das Sicherungselement 131 ausgestaltet, eine Drehung der Zentralverschlussschraube 91 in Bezug auf die Radnabe 7 zu verhindern. Dies kann bevorzugt dadurch erfolgen, dass das Sicherungselement 131 mit der Fahrzeugnabe 7 und, zumindest in einer Vorzugsposition 133, zusätzlich mit der Zentralverschlussschraube 91 in Eingriff ist. Der Eingriff stellt einen Formschluss in Bezug auf die Drehung um die axiale Richtung A her, wodurch die Drehung der Zentralverschlussschraube 91 verhindert werden kann.

Das Sicherungselement 131 ist, zumindest in der Vorzugsposition 133, im radialen Zentrum 135 der Zentralverschlussschraube 91 angeordnet. Das Sicherungselement 131 kann mit einem Rückstellorgan 137 versehen oder kraftübertragend mit diesem verbunden sein. Das Rückstellorgan 137, insbesondere eine Feder 139, ist dazu ausgestaltet, das Sicherungselement 131 in die Vorzugsposition 133 zu bewegen.

In der Vorzugsposition 133 ist das Sicherungselement in Eingriff mit der Fahrzeugnabe 7 und der Zentralverschlussschraube 91. Um diesen Eingriff zu lösen, muss zunächst die Federkraft Fₐ des Rückstellorgans 137 überwunden und das Sicherungselement 131 aus der Vorzugsposition 133 bewegt werden. Insbesondere kann das Sicherungselement 131 in die Fahrzeugnabe 7 geschoben werden. Anschließend kann die Zentralverschlussschraube 91 gedreht werden, um ein Fahrzeugrad (nicht dargestellt) zu befestigen oder abzunehmen.

Um den Eingriff herzustellen, kann das Sicherungselement 131 beispielsweise mit wenigstens einem in radialer Richtung vorspringenden und sich in axialer Richtung erstreckendem Formschlusselement 140 versehen sein, das in der Vorzugsposition 133 mit einer komplementär ausgestalteten Aufnahme 142 der Zentralverschlussschraube 91 und mit einer komplementär ausgestalteten Aufnahme 144 der Radnabe in Eingriff ist.

Die Aufnahmen 142 und 144 fluchten in der axialen Richtung A miteinander. Wird das Sicherungselement 131 gegen das Rückstellorgan 137 unter Aufwendung der Kraft Fₐ entlang der axialen Richtung A in die Fahrzeugnabe 7 gedrückt, wird der Eingriff der Elemente 140 und 142 gelöst.

Der Vorsprung 140 hat bevorzugt die Form einer Schiene und die Aufnahmen 142 und 144 jeweils die Form einer Nut zur Aufnahme dieser Schiene. Bevorzugt ist das Sicherungselement 131 mit einer Mehrzahl von Vorsprüngen 140 versehen, die bevorzugt in Umfangsrichtung U voneinander beabstandet an dem Sicherungselement 131 angeordnet sind. Die Zentralverschlussschraube 91 und die Nabe 7 sind dann mit entsprechenden Aufnahmen 142 und 144 versehen.

Durch das Zusammenspiel der Vorsprünge 140 und den Aufnahmen 144 in der Fahrzeugnabe 7 ist auch der Eingriff mit der Fahrzeugnabe 7 sicherstellt. Dieser Eingriff besteht vorzugsweise dauerhaft. Das Sicherungselement 131 ist also in Bezug auf eine Rotation um die axiale Richtung A starr mit der Fahrzeugnabe 7 verbunden. Entlang der axialen Richtung A kann es dagegen relativ zur Fahrzeugnabe 7 verschieblich sein.

Das Sicherungselement 131 kann Teil der Fahrzeugnabe 7 sein und an dieser verbleiben, wenn die Zentralverschlussschraube 91 abgenommen wird. Alternativ dazu kann das Sicherungselement 131 Teil der Zentralverschlussschraube 91 sein und an dieser verbleiben.

Das Sicherungselement 131 kann mit einem Gewinde 141 zur Anbringung eines erfindungsgemäßen Zubehöradapters 13 versehen sein. Beispielsweise kann das Sicherungselement 131 mit einer zentralen Bohrung 143 versehen sein, die bevorzugt koaxial mit der Zentralverschlussschraube 91 und damit mit der axialen Richtung A des Fahrzeugrads verläuft. Diese Bohrung 143 kann mit einem Innengewinde 145 versehen sein, in das sich ein Zubehöradapter 13, insbesondere an seinem Gewindeabschnitt 15, einschrauben lässt. Alternativ dazu kann das Sicherungselement 131 auch mit einem nach außen vorspringenden Außengewinde (nicht dargestellt) versehen sein, an dem sich ein Zubehöradapter 13 mit einem Innengewinde montieren lässt.

Ein Zubehöradapter 13 ist in Figur 19 angedeutet. Dieser ist an seinem Gewindeabschnitt 15 mit seinem Gewinde 83 in das Sicherungselement 131 eingeschraubt. Um zu verhindern, dass der Zubehöradapter 13 das Sicherungselement 131 in die Fahrzeugnabe 7 hineindrückt und so den Eingriff mit der Zentralverschlussschraube 91 löst, ist eine Ringscheibe 157 vorgesehen.

Die Ringscheibe 157 kann in einem montierten Zustand 147 an einem Absatz 149 einer Mittenbohrung 151 der Zentralverschlussschraube 91 anliegen und sich dort in der axialen Richtung A abstützen. Bevorzugt liegt die Ringscheibe 157 entlang der vollen Umfangsrichtung U an dem Absatz 149 an. Die Ringscheibe 157 verhindert, dass der Zubehöradapter 13 bei der Montage oder im Betrieb des Fahrzeugs in die Fahrzeugnabe 7 gedrückt und das Sicherungselement 131 auf diese Weise unbeabsichtigt von der Zentralverschlussschraube 91 gelöst wird.

Der Zubehöradapter 13 ragt zumindest mit seinem Gewindeabschnitt 15 durch eine zentrale Öffnung 153 der Ringscheibe 157 hindurch, um das Sicherheitselement 131 zu erreichen.

Zur sicheren Verbindung mit dem Sicherungselement 131 weist der Zubehöradapter 13 eine Schulter 155 auf. Die Schulter 155 des Zubehöradapters 13 verläuft bevorzugt entlang der Umfangsrichtung U vollständig um den Zubehöradapter 13, sodass dieser mit seiner Schulter 155 gleichmäßig an dem Sicherungselement 131 anliegen kann. Die Schulter 155 stellt einen Anschlag 67 des Zubehöradapters 13 dar. Der Zubehöradapter 13 wird zu dessen Befestigung gegen das Sicherungselement 131 verschraubt. Das Sicherungselement 131 stellt zumindest für den Zubehöradapter 13 einen Teil der Fahrzeugnabe 7 dar.

Damit der Zubehöradapter 13 durch die Ringscheibe 157 daran gehindert werden kann, das Sicherungselement 131 weiter in die Fahrzeugnabe 7 zu drücken und so den Eingriff mit der Zentralverschlussschraube 89 zu lösen, weist der Zubehöradapter 13 einen ringförmigen Sicherungsabschnitt 158 auf. Bei einer Bewegung des Zubehöradapters 13 in Richtung auf die Fahrzeugnabe 7 kann der Sicherungsabschnitt 158 gegen die Ringscheibe 157 stoßen. Dadurch wird der Zubehöradapter 13 an einer weiteren Bewegung in Richtung der Fahrzeugnabe 7 gehindert werden. Der Sicherungsabschnitt 158 kann insbesondere entlang der Umfangsrichtung U ringförmig um den Zubehöradapter 13 umlaufen.

Das Sicherungselement 131 ist durch eine Befestigung in der Radnabe 7 daran gehindert, dem Zubehöradapter 13 entgegenzukommen. Folglich kann eine feste Schraubverbindung des Zubehöradapters 13 mit dem Sicherungselement 131 unter Verwendung des Spannteils 21 erreicht werden.

In alternativen Ausführungsformen kann die Ringscheibe 157 an anderen umlaufenden Abschnitten der Mittenbohrung 151, beispielsweise am Absatz 159 anliegen. Die Ringscheibe 157 muss dann entsprechend dimensioniert sein. Eine weitere Alternative kann darin bestehen, dass der Zubehöradapter 13 selbst mit seiner Schulter 155 oder einem anderen Abschnitt an einem Absatz der Zentralverschlussschraube 91 anliegt. Dann kann auch auf eine Ringscheibe 157 verzichtet werden.

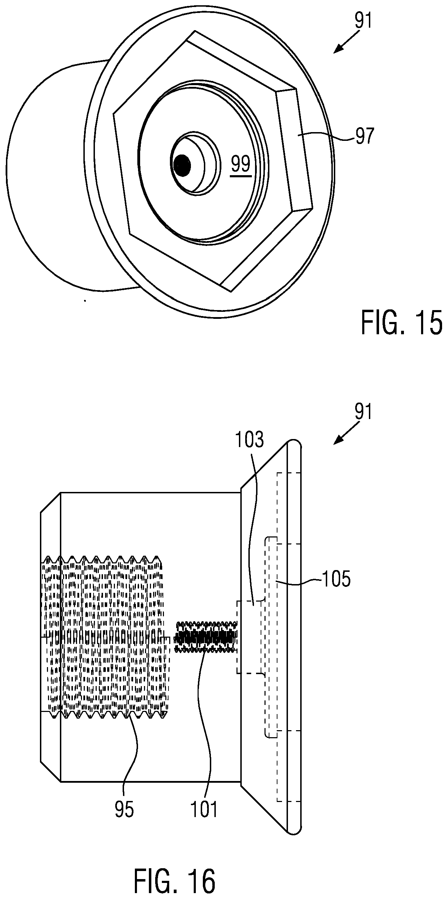

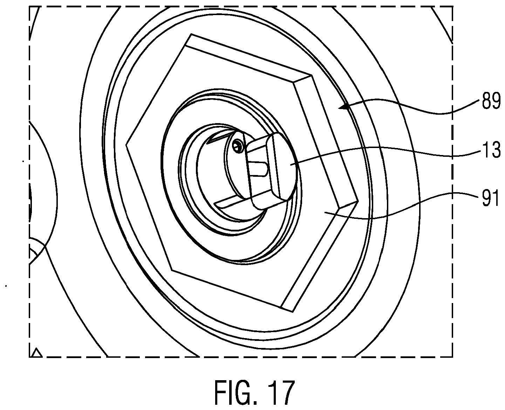

Im Halteabschnitt 17 kann der Zubehöradapter 13 mit einem entsprechenden Haltemittel, beispielsweise einem Bolzen 43, zur Anbringung eines Kraftfahrzeugzubehörs versehen sein. Insbesondere kann der Zubehöradapter 13 an seinem Halteabschnitt 17 gemäß einer der mit Bezug auf die Figuren 1 bis 17 beschriebenen Ausführungsformen gebildet sein.

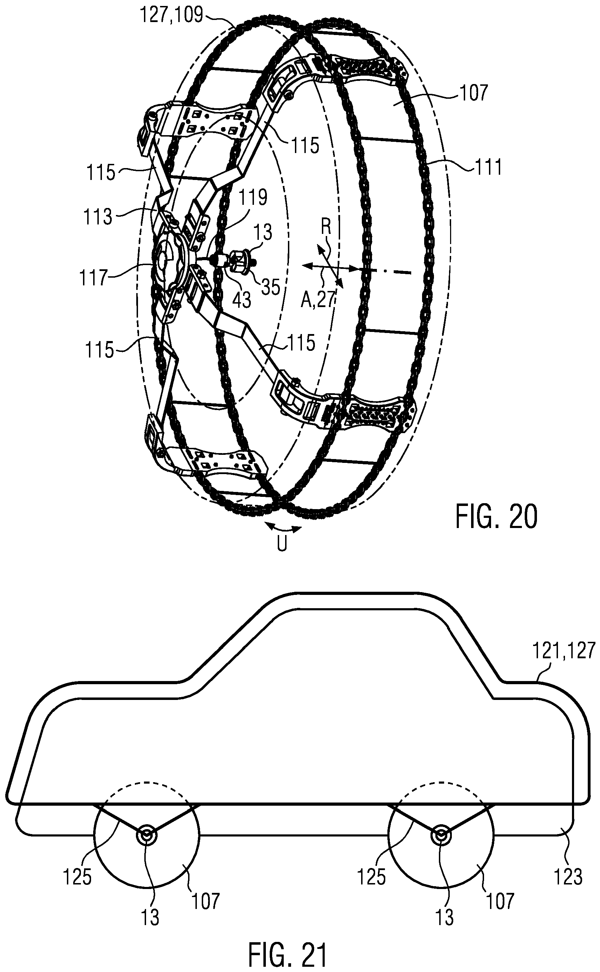

Im Folgenden sind zwei vorteilhafte Anwendungen des erfindungsgemäßen Zubehöradapters 13 mit Bezug auf die Figuren 20 und 21 beschrieben. In beiden Figuren sind die Zubehöradapter 13 jeweils nur angedeutet. Die dargestellten Einsatzmöglichkeiten können mit jeder der oben beschriebenen Ausführungsformen, auch in Verbindung mit einer Zentralverschlussschraube, realisiert werden.

Fig. 20 zeigt ein Fahrzeugrad 107 eines Kraftfahrzeugs 123, bei dem ein Zubehöradapter 13 an der Radnabe 7 (nicht dargestellt) befestigt ist. Der Zubehöradapter 13 dient dazu, ein selbstzentrierendes Gleitschutzmittel 109 am Fahrzeugrad 107 zu halten. Das selbstzentrierende Gleitschutzmittel 109 ist mit einem Laufnetz 111 versehen. Auf die Ausgestaltung des Laufnetzes kommt es an dieser Stelle nicht an. Das Laufnetz 111 kann aus Seilen, Ketten oder anderen Teilen aufgebaut sein. Es kann Kettennetze, Traktionsstege oder andere geeignete Hilfsmittel zur Traktionsverbesserung aufweisen.

Das Laufnetz 111 ist mit einer Haltevorrichtung 113 versehen, welche Ausleger 115 aufweist, die sich kreuzförmig von einem Befestigungsmittel 117 der Haltevorrichtung 113 wegerstrecken. Das Befestigungsmittel 117 ist über ein Verbindungsmittel 119 mit dem Zubehöradapter 13 verbunden. Das Verbindungsmittel 119 kann beispielsweise eine Kette, ein Seil, ein Haken, eine Stange oder ein anderes geeignetes Mittel sein. Das Befestigungsmittel 117 ragt zumindest abschnittsweise durch die Öse 35, bzw. ist am Bolzen 43 eingehängt. Bevorzugt erzeugt die Befestigung über das Befestigungsmittel 119 einen Zug auf die Haltevorrichtung 113 so dass das Laufnetz 111 in einer vorbestimmten Lage auf einer Lauffläche der Fahrzeugreifens 107 zu liegen kommt.

Das Gleitschutzmittel 109 und der Zubehöradapter 13 können zusammen einen Gleitschutzsatz 129 bilden. Der Gleitschutzsatz 129 kann vorteilhaft sein, um aufeinander abgestimmte Ausführungen eines Zubehöradapters 13 und eines Gleitschutzmittels 109 zu vertreiben. Es ist auch möglich, den Gleitschutzsatz 129 in einem vormontierten oder in einem dauerhaft montierten Zustand zu vertreiben. Sowohl im vormontierten als auch im dauerhaft montierten Zustand kann das Gleitschutzmittel 109 unverlierbar am Zubehöradapter 13 gehalten sein. Im vormontierten Zustand kann die Verbindung zum Zubehöradapter durch einen Anwender gelöst werden. Im dauerhaft montierten Zustand ist ein Lösen der Verbindung durch den Anwender dagegen nicht vorgesehen.

Im vormontierten oder im dauerhaft montierten Zustand kann beispielsweise ein Verbindungsmittel 119 des Gleitschutzmittels 109 am Halteabschnitt 17 des Zubehöradapters 13 gehalten sein. Weist der Zubehöradapter 13 einen Bolzen 43 auf, kann das Verbindungsmittel 119 am Bolzen 43 gehalten sein.

Fig. 21 zeigt die Verwendung von Zubehöradaptern 13 zur Befestigung eines Zeltes 121 an einem Kraftfahrzeug 123. Die Fahrzeugräder 107 des Kraftfahrzeugs 123 sind jeweils mit den Zubehöradaptern 13 versehen.

Haltemittel 125 des Zeltes 121 sind in den Ösen 35 der Zubehöradapter 13 eingehängt. Die Haltemittel 125 können beispielsweise Seile, insbesondere elastische Seile, sein. Die Haltemittel 125 können zudem mit geeigneten Verbindungsmitteln (nicht dargestellt), beispielsweise Haken, versehen sein, mit denen sie in die Ösen 35 eingehängt werden können.

Das Zelt 121 und die Gleitschutzvorrichtung 109 stellen Beispiele für Kraftfahrzeugzubehör 127 dar.

### Bezugszeichen

- 1: Radfelge
- 3: Mittenbohrung
- 5: Zentralgewinde
- 7: Radnabe
- 9: Außengewinde
- 11: Zylinder
- 13: Zubehöradapter
- 15: Gewindeabschnitt
- 17: Halteabschnitt
- 19: Gewindeteil
- 21: Spannteil
- 23: Ringscheibe
- 25: Innengewinde
- 27: axiale Richtung des Zubehöradapters
- 29: Ringöffnung
- 31: Bohrung
- 33: Innengewinde
- 35: Öse
- 37: Durchgangsöffnung
- 39: Basis
- 40: Spannmechanismus
- 41: Backe
- 42: Mittenachse
- 43: Bolzen
- 44: Mittenachse
- 45: Öffnung
- 47: Ende
- 49: Bohrung
- 51: Schraube
- 53: Absatz
- 55: Schraubenkopfaufnahme
- 57: Schraubenkopf
- 59: Außengewinde
- 61: Innendurchmesser
- 63: Ringöffnung
- 65: Außendurchmesser
- 67: Anschlag
- 69: Innendurchmesser
- 71: Innengewinde
- 72: Schraubenantrieb
- 73: Madenschraube
- 75: Außengewinde
- 77: Innengewinde
- 79: hohlzylindrischer Abschnitt
- 81: Gewindebolzen
- 83: Außengewinde
- 85: zylindrischer Übergangsabschnitt
- 87: Durchmesser
- 89: Satz
- 91: Zentralverschlussschraube
- 93: Zentralverschlussfelge
- 95: Innengewinde
- 97: Antriebsabschnitt
- 99: Aufnahme
- 101: Innengewinde
- 103, 105: Abschnitte
- 107: Fahrzeugrad
- 109: Gleitschutzmittel
- 111: Laufnetz
- 113: Haltevorrichtung
- 115: Ausleger
- 117: Befestigungsmittel
- 119: Verbindungsmittel
- 121: Zelt
- 123: Kraftfahrzeug
- 125: Haltemittel
- 127: Kraftfahrzeugzubehör
- 129: Gleitschutzsatz
- 131: Sicherungselement
- 133: Vorzugsposition
- 135: radiales Zentrum
- 137: Rückstellorgan
- 139: Feder
- 140: Vorsprung
- 141: Gewinde
- 142: Aufnahme
- 143: zentrale Bohrung
- 144: Aufnahme
- 145: Innengewinde
- 147: montierter Zustand
- 149: Absatz
- 151: Mittenbohrung
- 153: zentrale Öffnung
- 155: Schulter
- 157: Ringscheibe
- 158: Sicherungsabschnitt
- 159: Absatz

- A: axiale Richtung
- R: radiale Richtung
- U: Umfangsrichtung

## Patentansprüche

1. Zubehöradapter (13) zur Befestigung von Kraftfahrzeugzubehör (127) an einer mit einem Zentralgewinde (5) versehenen Radnabe (7) eines Kraftfahrzeugs (123), wobei der Zubehöradapter (13) einen Gewindeabschnitt (15) und einen Halteabschnitt (17) umfasst, wobei der Gewindeabschnitt (15) ausgestaltet ist, mit dem Zentralgewinde (5) verschraubt zu werden und der Halteabschnitt (17) ausgestaltet ist, das Kraftfahrzeugzubehör (127) zu halten, und wobei der Zubehöradapter (13) ein Gewindeteil (19) und ein Spannteil (21) aufweist, wobei das Gewindeteil (19) den Gewindeabschnitt (15) aufweist und das Spannteil (21) ausgestaltet ist, mit dem Gewindeteil (19) verspannt zu werden, und wobei das Spannteil (21) als zur Anlage an der Fahrzeugnabe (7) und/oder einer Fahrzeugfelge (1) ausgestaltete Ringscheibe (23) gebildet ist.

2. Zubehöradapter (13) nach Anspruch 1, wobei das Gewindeteil (19) und/oder das Spannteil (21) ringförmig sind.

3. Zubehöradapter (13) nach Anspruch 1 oder 2, wobei das Spannteil (21) zwischen dem Gewindeabschnitt (15) und dem Halteabschnitt (17) angeordnet ist.

4. Zubehöradapter (13) nach einem der Ansprüche 1 bis 3, wobei das Spannteil (21) den Halteabschnitt (17) aufweist.

5. Zubehöradapter (13) nach einem der Ansprüche 1 bis 3, wobei das Gewindeteil (19) den Gewindeabschnitt (15) und den Halteabschnitt (17) aufweist.

6. Zubehöradapter (13) nach einem der Ansprüche 1 bis 5, wobei das Spannteil (21) oder das Gewindeteil (19) einen Anschlag (67) zur Anlage an der Radnabe (7) aufweisen.

7. Zubehöradapter (13) nach einem der Ansprüche 1 bis 6, mit wenigstens einem Spannmechanismus (40), der ausgestaltet ist, in einem verspannten Zustand des Zubehöradapters (13) einen Zug oder einen Druck zwischen dem Gewindeteil (19) und dem Spannteil (21) zu erzeugen.

8. Zubehöradapter (13) nach Anspruch 7, wobei der Spannmechanismus (40) wenigstens eine Schraube (51) und ein Gewinde (33, 71) für die wenigstens eine Schraube (51) in dem Gewindeteil (19) oder dem Spannteil (21) umfasst, wobei die Schraube (51) sich im verspannten Zustand am Gewindeteil (19) und am Spannteil (21) abstützt.

9. Zubehöradapter (13) nach Anspruch 8, wobei der Spannmechanismus (40) zwei Schrauben (51) umfasst, deren Mittenachsen (42) parallel zu einer Mittenachse (44) des Gewindes (25) im Gewindeabschnitt (15) verlaufen.

10. Zubehöradapter (13) nach einem der Ansprüche 1 bis 9, wobei der Halteabschnitt (17) wenigstens eine Öse (35) zur Befestigung von Kraftfahrzeugzubehör (127) aufweist.

11. Zubehöradapter (13) nach Anspruch 10, wobei die Öse (35) durch zwei voneinander beabstandete Backen des Halteabschnitts (17) und wenigstens einen die Backen (41) verbindenden Bolzen (43) gebildet ist.

12. Zubehöradapter (13) nach einem der Ansprüche 1 bis 11, wobei der Zubehöradapter (13) mit wenigstens einer Ringscheibe (157) versehen ist, durch die der Zubehöradapter (13) in einem an der Radnabe (7) montierten Zustand (147) zumindest abschnittsweise ragt, und die ausgestaltet ist, im montierten Zustand (147) an der Radnabe (7) anzuliegen und eine Bewegung des Zubehöradapters (13) in Richtung zur Radnabe (7) zu verhindern.

13. Gleitschutzsatz (129) umfassend ein Gleitschutzmittel (109) für ein Fahrzeugrad (107) und einen Zubehöradapter (13) nach einem der Ansprüche 1 bis 12, wobei das Gleitschutzmittel (109) unverlierbar mit dem Zubehöradapter (13) verbunden ist.

## Claims

1. Accessory adapter (13) for fastening a motor vehicle accessory (127) to a wheel hub (7) of a motor vehicle (123) provided with a central thread (5), the accessory adapter (13) comprising a threaded portion (15) and a holding portion (17), the threaded portion (15) is designed to be screwed to the central thread (5) and the holding section (17) is designed to hold the motor vehicle accessory (127), and wherein the accessory adapter (13) has a threaded part (19) and a clamping part (21), the threaded part (19) has the threaded section (15) and the clamping part (21) is designed to be clamped to the threaded part (19), and wherein the clamping part (21) is formed as an annular disc (23) designed to bear against the vehicle hub (7) and/or a vehicle wheel rim (1).

2. Accessory adapter (13) according to claim 1, wherein the threaded part (19) and/or the clamping part (21) are annular.

3. Accessory adapter (13) according to claim 1 or 2, wherein the clamping part (21) is arranged between the threaded section (15) and the holding section (17).

4. Accessory adapter (13) according to one of claims 1 to 3, wherein the clamping part (21) has the holding section (17).

5. Accessory adapter (13) according to one of claims 1 to 3, wherein the threaded part (19) has the threaded section (15) and the holding section (17).

6. Accessory adapter (13) according to one of claims 1 to 5, wherein the clamping part (21) or the threaded part (19) has a stop (67) for bearing against the wheel hub (7).

7. Accessory adapter (13) according to one of claims 1 to 6, with at least one clamping mechanism (40) which is designed to generate a tension or a pressure between the threaded part (19) and the clamping part (21) in a clamped state of the accessory adapter (13).

8. Accessory adapter (13) according to claim 7, wherein the clamping mechanism (40) comprises at least one screw (51) and a thread (33, 71) for the at least one screw (51) in the threaded part (19) or the clamping part (21), the screw (51) being supported on the threaded part (19) and on the clamping part (21) in the clamped state.

9. Accessory adapter (13) according to claim 8, wherein the clamping mechanism (40) comprises two screws (51), the center axes (42) of which run parallel to a center axis (44) of the thread (25) in the threaded section (15).

10. Accessory adapter (13) according to one of claims 1 to 9, wherein the holding section (17) has at least one lug (35) for fastening a motor vehicle accessory (127).

11. Accessory adapter (13) according to claim 10, wherein the eyelet (35) is formed by two spaced-apart cheeks of the holding section (17) and at least one bolt (43) connecting the cheeks (41).

12. Accessory adapter (13) according to one of claims 1 to 11, wherein the accessory adapter (13) being provided with at least one annular disc (157), through which the accessory adapter (13) projects, at least in sections, in a condition (147) mounted on the wheel hub (7), and which is configured to rest against the wheel hub (7) in the mounted condition (147) and to prevent a movement of the accessory adapter (13) in the direction of the wheel hub (7).

13. An anti-skid set (129) comprising an anti-skid means (109) for a vehicle wheel (107) and an accessory adapter (13) according to one of claims 1 to 12, wherein the anti-skid means (109) is undetachably connected to the accessory adapter (13).

## Revendications

1. Adaptateur d'accessoires (13) destiné à la fixation d'accessoires de véhicule automobile (127) au niveau d'un moyeu de roue (7), muni d'un filetage central (5), d'un véhicule automobile (123), dans lequel l'adaptateur d'accessoires (13) comprend une section filetée (15) et une section de retenue (17), dans lequel la section filetée (15) est conçue pour être vissée avec le filetage central (5) et la section de retenue (17) est conçue pour retenir l'accessoire de véhicule automobile (127), et dans lequel l'adaptateur d'accessoires (13) présente une partie filetée (19) et une partie de serrage (21), dans lequel la partie filetée (19) présente la section filetée (15) et la partie de serrage (21) est conçue pour être serrée avec la partie filetée (19), et dans lequel la partie de serrage (21) est formée de manière à venir en place au niveau du moyeu de véhicule (7) et/ou d'un disque annulaire (23) conçu comme une jante de véhicule (1).

2. Adaptateur d'accessoires (13) selon la revendication 1, dans lequel la partie filetée (19) et/ou la partie de serrage (21) sont de forme annulaire.

3. Adaptateur d'accessoires (13) selon la revendication 1 ou 2, dans lequel l'élément de serrage (21) est agencé entre la section filetée (15) et la section de retenue (17).

4. Adaptateur d'accessoires (13) selon l'une quelconque des revendications 1 à 3, dans lequel la partie de serrage (21) présente la section de retenue (17).

5. Adaptateur d'accessoires (13) selon l'une quelconque des revendications 1 à 3, dans lequel la partie filetée (19) présente la section filetée (15) et la section de retenue (17).

6. Adaptateur d'accessoires (13) selon l'une quelconque des revendications 1 à 5, dans lequel la partie de serrage (21) ou la partie filetée (19) présente une butée (67) destinée à venir en place au niveau du moyeu de roue (7).

7. Adaptateur d'accessoires (13) selon l'une quelconque des revendications 1 à 6, avec au moins un mécanisme de serrage (40) conçu pour produire une traction ou une pression entre la partie filetée (19) et la partie de serrage (21) dans un état serré de l'adaptateur d'accessoires (13).

8. Adaptateur d'accessoires (13) selon la revendication 7, dans lequel le mécanisme de serrage (40) comprend, dans la partie filetée (19) ou la partie de serrage (21), au moins une vis (51) et un filetage (33, 71) destiné à la au moins une vis (51), dans lequel la vis (51) vient en appui contre la partie filetée (19) et la partie de serrage (21) à l'état serré.

9. Adaptateur d'accessoires (13) selon la revendication 8, dans lequel le mécanisme de serrage (40) comprend deux vis (51) dont les axes médians (42) s'étendent dans la section filetée (15) parallèlement à un axe médian (44) du filetage (25).

10. Adaptateur d'accessoires (13) selon l'une quelconque des revendications 1 à 9, dans lequel la section de retenue (17) présente au moins un œillet (35) permettant la fixation d'accessoires de véhicule automobile (127).

11. Adaptateur d'accessoires (13) selon la revendication 10, dans lequel l'œillet (35) est formé par deux mâchoires de la section de retenue (17) espacées l'une de l'autre et par au moins un boulon (43) reliant les mâchoires (41).

12. Adaptateur d'accessoires (13) selon l'une quelconque des revendications 1 à 11, dans lequel l'adaptateur d'accessoires (13) est muni d'au moins un disque annulaire (157), à travers lequel l'adaptateur d'accessoires (13) fait saillie au moins par sections dans un état (147) où il est monté sur le moyeu de roue (7) et qui est conçu pour venir en place au niveau du moyeu de roue (7) à l'état monté (147) et pour empêcher un déplacement de l'adaptateur d'accessoires (13) en direction du moyeu de roue (7).

13. Kit antidérapant (129) comprenant un moyen antidérapant (109), destiné à une roue de véhicule (107), et un adaptateur d'accessoires (13) selon l'une quelconque des revendications 1 à 12, dans lequel le moyen antidérapant (109) est relié de manière imperdable à l'adaptateur d'accessoires (13).
